## Europäisches Patentamt
## European Patent Office
## Office européen des brevets

(19)

(11) Publication number: **0 008 397**
**B1**

(12)

# EUROPEAN PATENT SPECIFICATION

(45) Date of publication of patent specification: **14.10.81**

(51) Int. Cl.³: **F 24 J 3/02**

(21) Application number: **79102798.0**

(22) Date of filing: **03.08.79**

(54) Apparatus for receiving solar energy.

(30) Priority: **11.08.78 DE 2835348**

(43) Date of publication of application:
**05.03.80 Bulletin 80/5**

(45) Publication of the grant of the European patent:
**14.10.81 Bulletin 81/41**

(84) Designated Contracting States:
**AT BE CH FR GB IT NL SE**

(56) References cited:
**DE - A - 2 524 356**
**FR - A - 2 376 378**
**US - A - 4 000 734**
**US - A - 4 056 313**
**US - A - 4 116 539**

(73) Proprietor: **M.A.N. MASCHINENFABRIK AUGSBURG-NÜRNBERG Aktiengesellschaft**
**Dachauer Strasse 667 Postfach 50 06 20**
**D-8000 München 50 (DE)**

(72) Inventor: **Wildenrotter, Karl**
**Motor Strasse 33**
**D-8000 München 40 (DE)**

(74) Representative: **Devons, David Jon Marks & Clerk**
**57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Apparatus for receiving solar energy

This invention relates to apparatus for receiving solar energy.

It is known to convert solar energy into heat or electric current by means of solar-energy receiving surfaces in the form of reflectors used to focus the sun's rays, or in the form of solar cells. These are normally arranged together in large numbers to form a receiver having a large surface area exposed to the rays of the sun.

The ideal angle of incidence of the sun light is adjusted by continuously aiming the receiving surface to suit the prevailing height of the sun. Thus, the receiving surfaces are for the most part turned to the sky, directly exposing them to weather conditions including rain, hail, and also to dust. These factors can be extremely detrimental to the exposed receiving surfaces of the receiver.

It is known (see FR - A - 2 376 378) to pivot the individual receiving surfaces between an exposed position in which the receiving surfaces face the sun and a sheltered position in which the receiving surfaces face the earth. However, such individual pivoting of the receiving surfaces requires complicated mechanims such as racks and pinions and/or numerous interlocking levers for each surface to ensure that the individual receiving surfaces are pivoted equally. Such apparatus is therefore unsuitable for use e.g. in deserts where it is to be left unattended for long periods.

It is also known (see DE - A - 2 524 356) to pivot a receiver having a solar-energy receiving surface between positions in which it faces the sun and a substantially-horizontal sheltered position in which it faces the earth. Either an extremely large receiver is required, or a plurality of receivers arranged side by side and each with its own pivoting means.

An object of the invention is to provide apparatus for receiving solar energy in which a plurality of receiving surfaces normally exposed to the sun light may be pivoted downwardly by a much more simple and reliable means than heretofore.

The present invention comprises apparatus for receiving solar energy comprising a receiver formed from a plurality of separate solar-energy receiving surfaces mounted on a supporting structure the receiving surfaces being movable between an exposed position in which they face the sun and a substantially-horizontal sheltered position in which they face the earth, characterised in that the receiver is mounted via the supporting structure on a pedestal so as to be pivotable as a unit thereon by pivoting means to move said receiving surfaces between said exposed position and said substantially-horizontal sheltered position, the pedestal is mounted on a base so as to be rotatable about a substantially-vertical axis, and the pivoting means comprise a lever and a link the lever being pivotably mounted between its ends on the pedestal, one end of the lever being pivotably connected to one end of the link, the other end of the link being pivotably connected to the receiver, and actuating means connected to the other end of the lever for pivoting the receiver via the lever and the link.

In this manner the reflecting surfaces or surfaces of the solar cells may be protected by a simple pivoting movement of the receiver as a unit thus eliminating the need for pivoting means for each reflecting surface. It is thus also possible to pivot the receiver downwardly for the duration of the night to prevent contamination by dust and moisture. This position can be used also for servicing and cleaning the receiver because it permits direct access to the entire surface from the ground.

In order to maintain the ideal angle of incidence of the sun light incident on the receiver during the day the receiver should be made to track the sun across the sky. For this purpose, the receiver is pivotable as a unit about a vertical and a horizontal axis. It will be advantageous to use this horizontal axis also for pivotal movement into the sheltered position thereby eliminating the need for additional joints.

To obviate the need for excessively long lever arms the receiver may be centrally supported on the pedestal and the central area may be provided with a gap the width of the pedestal, the pedestal extending through the gap when the receiver is pivoted to the sheltered position. For this purpose the receiver is pivoted about a horizontal axis extending through the pedestal and traversing the receiver horizontally and centrally on its rear side. During the pivoting movement to the sheltered position the receiver halves separated by the gap are carried along the sides of the pedestal until the receiver has reached its horizontal position.

In order to minimize the gap, which reduces the total energy-receiving surface, the pedestal is made flat and arranged for rotation about the vertical axis together with the receiver.

Preferably, the plane of the receiver is arranged for rotation through a 180-degree arc.

The pivoting means which are simple to construct, permit the receiver to be moved reliably and with a minimum of servicing about the horizontal axis for sun-tracking as well as for pivoting it into the sheltered position. Preferably, the lever and link, the joints of which also have horizontal axes of rotation, move in a vertical plane extending through the gap in the receiver. This prevents collision of the mechanical pivoting device with the receiver and so permits the linkage to be designed simply.

The actuating means may comprise, for example, threaded spindles, chains, racks, etc.,

driven by an electric motor.

In order to minimize the range of action in the plane of movement of the linkage, the lever, which is connected to the actuating means is formed by two arms rigidly connected together at an angle less than 180°. The lever may take the shape of a boomerang for adequate stability to sustain the moment forces and to have a maximally flat shape in a direction normal to the pivotal plane.

Figure 1 is a perspective view of apparatus for receiving solar energy according to the invention; and

Figures 2 and 3 illustrate schematically different positions of the pivoting device.

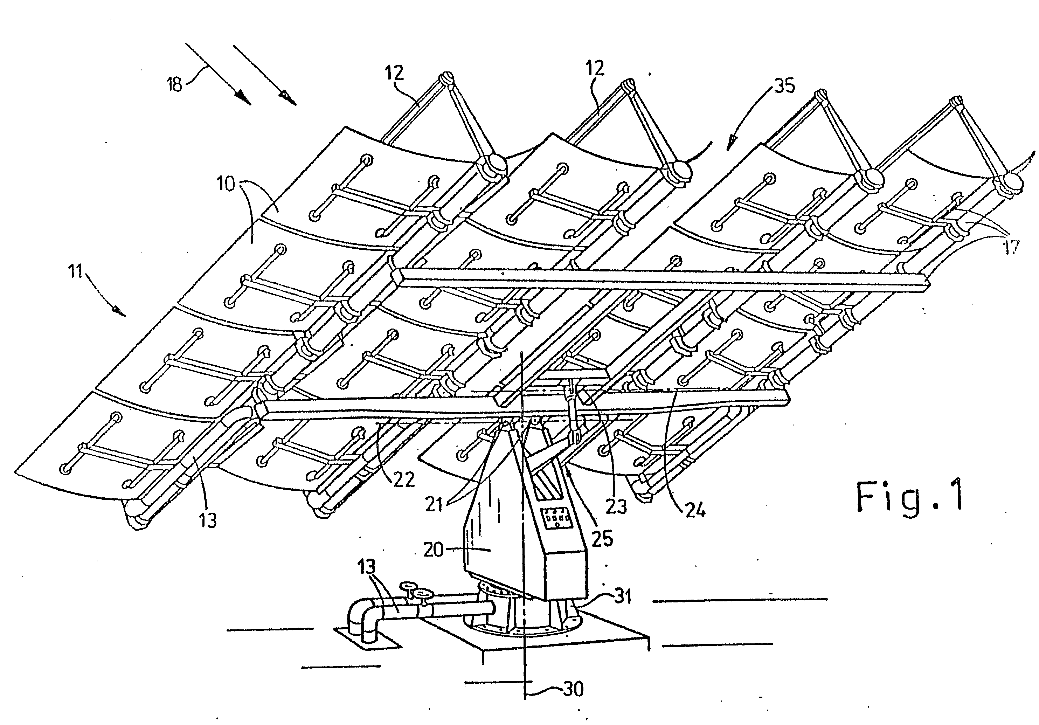

Figure 1 shows apparatus for receiving solar energy and converting it into thermal energy. It essentially consists of a receiver 11, formed by a number of individual reflectors 10, absorber pipes 12 and a pipe system 13 for a medium to carry the heat. The reflectors 10 are cylindrical-parabolic mirrors with their focal line arranged in a north-south direction and with their rear attached to a supporting structure 17. The absorber 12 is arranged in the focal line of a plurality of reflectors 10, and is connected to the pipe system 13. The sun's rays 18 impinging on the reflectors 10 are focussed onto the respective absorber 12 where the energy of the sun's rays is turned into thermal energy. The thermal energy is finally transferred to the heat carrier flowing through the absorber pipe 12 to be stored thereby.

The reflectors 10 combined with the supporting structure 17 to form the receiver 11 are carried on a pedestal 20. The points of support are formed by two joints 21 having a horizontal pivot axis 22 and a third joint 23 having a horizontal pivot axis 24. The receiver 11 is pivoted as a unit about the horizontal axis 22 by actuating an associated system of levers 25. The pedestal 20 of the supporting structure is additionally supported on a base 31 for rotation about a vertical axis 30. This arrangement permits the receiver 11 plus pedestal 20 to be pivoted about the vertical axis 30 and additionally about the horizontal axis 22 so that the surfaces of the reflectors 10 track the sun for maximum efficiency of the receiver.

In its operating position the receiver 11 is in a position in which the reflecting surfaces of the reflectors 10 point substantially upwards. In this operating position the reflecting surfaces are exposed to the deposition of dust and moisture, and also conceivably to hail. The receiver 11, being inclined as its is most of the time, also offers a relatively large surface of resistance to prevailing wind currents, which at gusts and elevated wind velocities may damage the apparatus.

To eliminate such risks and combat the deposition of dust, a pivoting mechanism 25 is provided for pivoting the receiver 11 (as a unit) through a maximum arc of about 180°C. This arc includes a sheltered position in which the reflectors 10 are tilted downwards so that the reflector surfaces point to the ground and only the rear of the reflectors 10 are exposed to the elements. In this position the receiver 11 also takes a horizontal, bottommost position in which it is protected from damage by wind and is readily accessible for cleaning and maintenance.

For reasons of balance, the receiver 11 is supported centrally on the pedestal 20. So that the receiver 11 may be pivoted through the full arc, the receiver is provided with a gap 35 which, being arranged between the rows of reflectors 10, extends in a vertical plane through pedestal 20 at right angles to the horizontal axis 22. In order to minimize the gap 35, the pedestal 20 is made as narrow as possible in a direction normal to said plane.

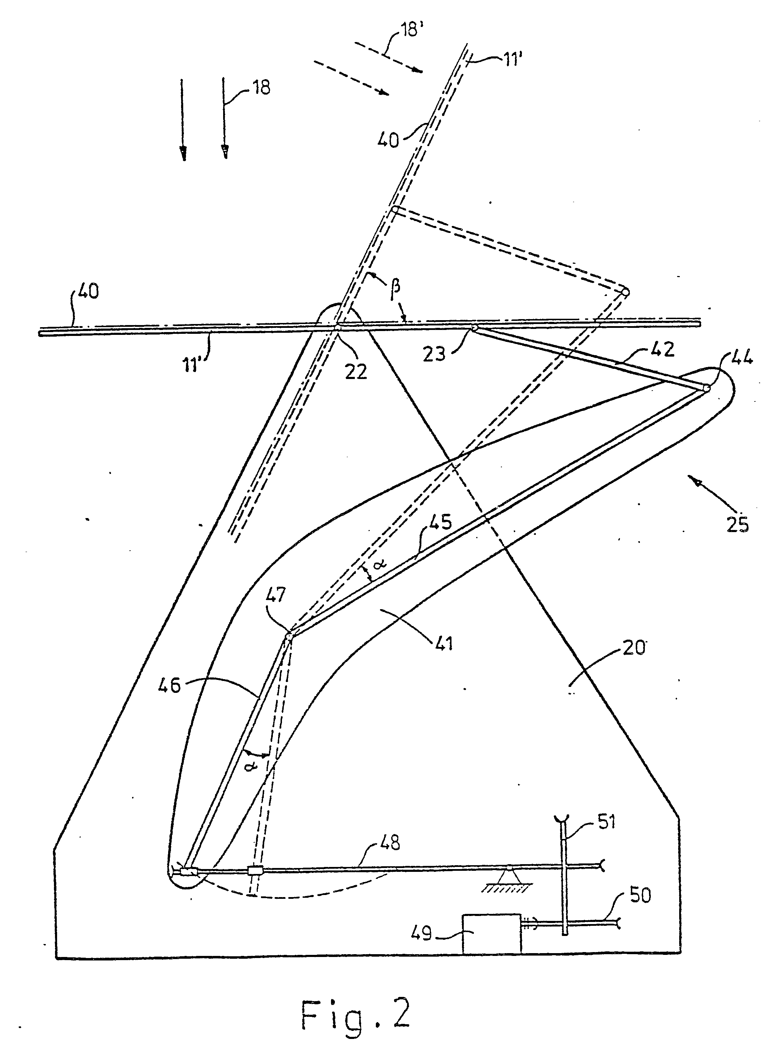

Figure 2 illustrates in solid line an extreme operating position of the receiver 11, which is the horizontal position. The broken lines additionally illustrate an inclined operating position. For clarity the receiver 11 is shown here by a plane 11 extending through the horizontal axis 22 at the upper end of the pedestal 20, and the side having the reflecting surfaces is indicated by a dash-dotted line 40. The mechanical portion of the pivoting means comprises a linkage 25 including a lever 41 and a link 42, which is in the form of a thrust rod and is provided with a joint 23 at one end. At its other end 44 the link 42 is hinged to the first lever 41. The lever 41 is formed by two arms 45 and 46 rigidly connected one to the other at a certain angle and pivotally supported at point 47 in the pedestal 20. The lever arms 45 and 46 of the boomerang-shaped lever 41 are here shown as rods for clarity. The free end of the lever 41 is connected to a screwed spindle 48, which in order to actuate the pivoting means is rotated by a motor 49 acting through transfer spindles 50, 51.

Rotation about the horizontal axis 74 through an angle $\alpha$ of the lever 41, and corresponding displacement of the link 42, will rotate the plane of the receiver 11 about the axis 22 through a greater angle $\beta$.

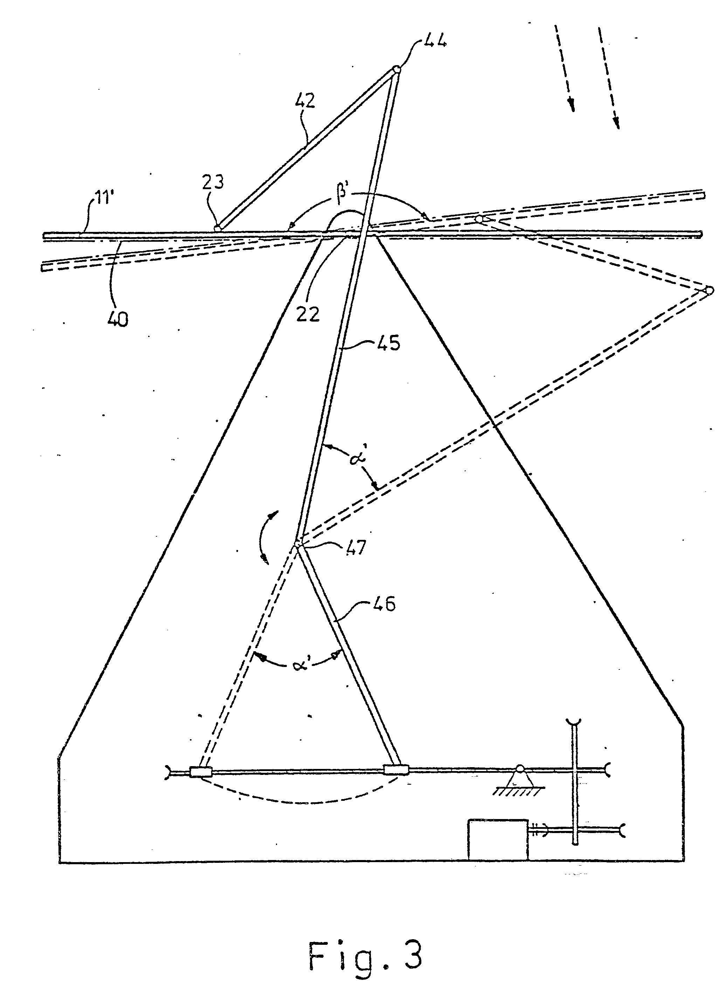

When the lever 41 is pivoted still further in a counterclockwise direction, the plane 11 rotates through 180° from the starting position shown in Figure 2 to reach the sheltered position in which the plane 11 extends horizontally with the reflecting side 40 pointing down. This is the position as illustrated in Figure 3 by the continuous line. The broken lines shows a nearly horizontal operating condition.

The apparatus may be operated by electronic control means, in which the height of the sun is sensed by means of a photosensor or similar means which supplies a conventional control unit with corresponding signals amplified by an amplifier, so that the receiver 11 is oriented continuously and automatically to maintain an optimum position relative to the sun. The pivoting movement about the horizontal axis 22 is controlled in combination with the rotation about the vertical axis 30. In this arrangement the receiver 11 can optionally be made to follow warning commands to move it into the protective position in the event of high wind velocities or hail.

Various modifications may be made within the scope of the invention. Thus the reflectors 10 may be replaced by energy-absorbing devices, e.g. solar cells converting the solar energy directly into electrical energy, or heat-absorbing panels.

### Claims

1. Apparatus for receiving solar energy comprising a receiver (11) formed from a plurality of separate solar-energy receiving surfaces (10) mounted on a supporting structure (17), the receiving surfaces being movable between an exposed position in which they face the sun and a substantially-horizontal sheltered position in which they face the earth, characterised in that the receiver (11) is mounted via the supporting structure (17) on a pedestal (20) so as to be pivotable as a unit thereon by pivoting means (25) to move said receiving surfaces between said exposed position and said substantially-horizontal sheltered position, the pedestal (20) is mounted on a base (31) so as to be rotatable about a substantially-vertical axis (30), and the pivoting means comprise a lever (41) and a link (42), the lever (41) being pivotably mounted (47) between its ends on the pedestal (20), one end of the lever (41) being pivotably connected (44) to one end of the link (42), the other end of the link (42) being pivotably connected (23) to the receiver (11), and actuating means (48—51) connected to the other end of the lever (41) for pivoting the receiver (11) via the lever (41) and the link (42).

2. Apparatus according to claim 1, wherein the receiver (11) is pivotable as a unit about a substantially-horizontal axis (22) for tracking the sun, and is pivotable about the same axis (22) between the said exposed and sheltered positions.

3. Apparatus according to claim 1 or 2, wherein the receiver (11) is provided with a substantially-central gap (35) having a width substantially equal to the width of the pedestal (20) for allowing engagement of the gap (35) by the pedestal (20) on pivotal movement of the collector (11) into the sheltered position.

4. Apparatus as claimed in claim 3, wherein the lever (41) and the link (42) move in a vertical plane extending through the gap (35) in the receiver (11).

5. Apparatus according to any one of the preceding claims, further comprising an electronic control unit for controlling sun-tracking movement of the receiver (11) and being responsive to signals from a warning system to pivot the receiver (11) into the sheltered position.

6. Apparatus according to any one of the preceding claims, wherein the receiving surfaces comprise energy-reflecting means.

7. Apparatus according to any one of the preceding claims, wherein the receiving surfaces comprise energy-absorbing means.

### Revendications

1. Dispositif destiné à recevoir de l'énergie solaire comprenant un récepteur (11) formé à partir d'un ensemble de surfaces de réception d'énergie solaire séparées (10) montées sur une structure de support (17), les surfaces réceptrices étant mobiles entre une position exposée dans laquelle elles font face au soleil et une position abritée pratiquement horizontale dans laquelle elles font face à la terre, caractérisé en ce que le récepteur (11) est monté par l'intermédiaire de la structure de support (17) sur un piédestal (20) de façon à pouvoir pivoter d'un seul tenant sur le piédestal à l'aide de moyens de pivotement (25), pour déplacer les surfaces réceptrices entre ladite position exposée et ladite position abritée pratiquement horizontale, le piédestal (20) est monté sur une base (31) de façon à pouvoir tourner autour d'un axe pratiquement vertical (30), et les moyens de pivotement comprennent un levier (41) et une biellette (42), le levier (41) étant monté de façon pivotante (47), entre ses extrémités, sur le piédestal (20), une extrémité du levier (41) étant accouplée de façon pivotante (44) à une extrémité de la biellette (42), l'autre extrémité de la biellette (42) étant accouplée de façon pivotante (23) au récepteur, et des moyens de manoeuvre (48—51) accouplés à l'autre extrémité du levier (41) pour faire pivoter le récepteur (11) par l'intermédiaire du levier (41) et de la biellette (42).

2. Dispositif selon la revendication 1, dans lequel le récepteur (11) peut pivoter d'un seul tenant autour d'un axe pratiquement horizontal (22) pour suivre le soleil et peut pivoter autour du même axe (22) entre lesdites positions exposée et abritée.

3. Dispositif selon la revendication 1 ou 2, dans lequel le récepteur (11) comporte un espace (35) pratiquement central ayant une largeur pratiquement égale à la largeur du piédestal (20) pour permettre au piédestal (20) de pénétrer dans l'espace (35) sous l'effet du mouvement de pivotement du collecteur (11) vers la position abritée.

4. Dispositif selon la revendication 3, dans lequel le levier (41) et la biellette (42) se déplacent dans un plan vertical passant dans l'espace (35) formé dans le récepteur (11).

5. Dispositif selon l'une quelconque des revendications précédentes, comprenant en outre une unité de commande électronique destinée à commander le mouvement de poursuite du soleil du récepteur (11) et réagissant aux signaux provenant d'un système d'avertissement en faisant pivoter le récepteur (11) vers la position abritée.

6. Dispositif selon l'une quelconque des revendications précédentes, dans lequel les surfaces réceptrices comprennent des moyens de réflexion d'énergie.

7. Dispositif selon l'une quelconque des revendications précédentes, dans lequel les surfaces réceptrices comprennent des moyens d'absorption d'énergie.

## Patentansprüche

1. Sonnenkollektoranlage mit einer Reflektoranlage, bestehend aus einer Vielzahl von einzelnen Reflektoren bzw. Solarzellen, die an einer Tragstruktur angeordnet sind, wobei die Reflektoren bzw. Solarzellen zwischen einer der Sonne ausgesetzten Stellung und einer im wesentlichen horizontalen dem Erdboden zugewandten Schutzstellung schwenkbar sind, dadurch gekennzeichnet, daß die Tragstruktur (17) mittels einer Schwenkeinrichtung (25) auf einem Tragwerksockel (20) einheitlich schwenkbar angeordnet ist derart, daß die Reflektoranlage zwischen der der Sonne ausgesetzten und der im wesentlichen horizontalen geschützten Stellung als Einheit darauf schwenkbar ist, daß der Tragwerksockel (20) auf einer Basis (31) um eine im wesentlichen vertikale Achse drehbar angeordnet ist, und daß die Schwenkeinrichtung (25) zwei hintereinander angelenkte Hebel (41, 42) hat, daß der erste Hebel (41) zwischen seinen Enden schwenkbar am Tragwerksockel angelenkt ist, und daß ein Ende des ersten Hebels schwenkbar mit dem einen Ende des zweiten Hebels (42) verbunden ist, ferner daß das andere Ende des zweiten Hebels (42) mit der Reflektoranlage (11) schwenkbar verbunden ist, schließlich daß das andere Ende des ersten Hebels (41) mit einer Schubeinrichtung (48—51) verbunden ist, die die Reflektoranlage mittels beider Hebel schwenken soll.

2. Anlage nach Anspruch 1, dadurch gekennzeichnet, daß die Reflektoranlage (11) als Einheit um eine im wesentlichen horizontale Achse (22) schwenkbar ist, um die Reflektoranlage der Sonne nachzuführen und sie von der der Sonne ausgesetzten Stellung in die Schutzstellung zu bringen.

3. Anlage nach Anspruch 1 oder 2, dadurch gekennzeichnet, daß die Reflektoranlage (11) etwa in ihrem Mittelbereich einen freien Spalt (35) hat, dessen Breite der des Tragwerksockels (20) entspricht, um den Sockel beim Schwenken der Reflektoranlage in die Schutzstellung durch den Spalt durchführen zu können.

4. Anlage nach Anspruch 3, dadurch gekennzeichnet, daß die Hebel (41, 42) in einer vertikalen Ebene schwenkbar sind, die durch den Spalt (35) der Reflektoranlage (11) führt.

5. Anlage nach einem der vorhergehenden Ansprüche, dadurch gekennzeichnet, daß eine elektronische Steuerung vorgesehen ist, die eine Nachführung der Reflektoranlage (11) nach der Sonnenbahn steuert und außerdem Warnsignale aufnehmen kann, um die Reflektoranlage in die Schutzstellung zu bringen.

6. Anlage nach einem der vorhergehenden Ansprüche, dadurch gekennzeichnet, daß die Reflektoranlage aus Reflektoren besteht.

7. Anlage nach einem der vorhergehenden Ansprüche, dadurch gekennzeichnet, daß die Reflektoranlage aus Solarzellen besteht.

Fig.1

0 008 397

Fig. 2

Fig. 3